# EUROPEAN PATENT APPLICATION

(11) **EP 4 852 169 A1**
(43) Date of publication of application: **09.12.2026**
(21) Application number: 26182827.1
(22) Date of filing: 03.06.2026
(51) Int. Cl.: H01M 50/204, H01M 50/30, H01M 50/367, H01M 50/383

(54) **BATTERY PACK**

(30) Priority: 05.06.2025 KR 20250073716
(71) Applicant: SAMSUNG SDI CO., LTD., Yongin-si, Gyeonggi-do 17084 (KR)
(72) Inventor: CHOI, HANYOUNG, 17084 Yongin-si, Gyeonggi-do (KR)
(74) Representative: Meissner Bolte Partnerschaft mbB

(57) **Abstract**

A battery pack (1) includes battery cells (100) adjacent to each other in a first direction and stacked into a stack, each of the battery cells (100) having a vent (13), and a pair of end plates (110) at opposite ends of the stack, each of the pair of end plates (110) including an internal hollow (113) extending in a longitudinal direction thereof, the longitudinal direction extending in a second direction intersecting the first direction, and a turbine (1100) in the internal hollow (113), the turbine (1100) being rotatable and including a plurality of disks (1110) spaced apart from each other in the longitudinal direction.

## Description

### BACKGROUND

### 1. Field

The invention relates to a battery pack.

### 2. Description of the Related Art

Secondary batteries, unlike primary batteries that cannot be recharged, are batteries that may be repeatedly charged and discharged and have been used as a power supply for various electronic devices. Secondary batteries may be used as separate single batteries or as a plurality of batteries electrically connected to each other depending on the types of electronic devices. For example, small devices, such as mobile phones may operate for a certain period of time with the power and capacity of a single secondary battery, whereas in cases, such as electric vehicles requiring high power and high capacity, a plurality of secondary batteries may be connected in series, parallel, or series-parallel to be used.

Secondary batteries may experience abnormal phenomena due to various causes, which may increase an internal temperature and cause gas to be generated internally through chemical reactions, etc., which may increase internal pressure. In battery cells in which abnormal phenomena occur, it is important to discharge the gas and resolve an increase in internal pressure through a vent, etc., e.g., to prevent dangerous situations, such as explosions. Furthermore, for a battery pack including a battery cell in which an abnormal phenomenon occurs, it is an important to maintain the stability of the battery pack by efficiently discharging the gas leaked through the vent of the battery cell.

The above-described information disclosed in the background art of the invention is only intended to improve understanding of the background of the invention and therefore may include information that does not constitute prior art.

### SUMMARY

According to an aspect of the invention, there is provided a battery pack including battery cells, each having a vent, arranged in a first direction in which the battery cells are stacked on each other and a pair of end plates arranged at opposite ends of the battery cells, wherein each of the pair of end plates includes an internal hollow extending in a longitudinal direction of the end plate in a second direction intersecting the first direction, a turbine, which is rotatable, is located in the internal hollow, and the turbine includes a plurality of disks apart from each other in the longitudinal direction.

A venting gas and exhaust particles emitted from the vents of the battery cells may be separated by the turbine.

The end plate may include an inlet through which the venting gas and the exhaust particles flow in an inward direction and an outlet through which the exhaust particles are discharged on an outer surface of the end plate.

The battery pack may further include a side plate coupled to the pair of end plates, wherein the side plate may include an exhaust port communicating with the internal hollow.

The venting gas may be discharged through the exhaust port.

Each of the plurality of disks may include at least one opening penetrating through the plurality of disks in a thickness direction of the plurality of disks.

The venting gas may flow in the internal hollow through the opening.

A gap between the plurality of disks may be 0.5 mm to 3 mm.

The battery pack may further include an upper plate, wherein the upper plate includes a vent opening corresponding to the vent, and the venting gas and the exhaust particles flow through the vent opening.

The upper plate may include a hollow, and the venting gas and the exhaust particles flowing through the vent opening may be discharged through the hollow to the end plate.

According to another aspect of the invention, there is provided a battery pack including battery cells, each having a vent, arranged in a first direction which may be a direction in which the battery cells are stacked with each other and a pair of end plates arranged at opposite ends of the battery cells, wherein each of the pair of end plates includes an internal hollow extending in a longitudinal direction of the end plate in a second direction intersecting the first direction, a turbine, which is rotatable, is located in the internal hollow, the turbine includes a plurality of disks apart from each other in the longitudinal direction, and the plurality of disks include a heat-resistant material.

A venting gas and exhaust particles emitted from the vents of the battery cells may be separated by the turbine.

The end plate may include an inlet through which the venting gas and the exhaust particles flow in an inward direction and an outlet through which the exhaust particles are discharged on an outer surface of the end plate.

The battery pack may further include a side plate coupled to the pair of end plates, wherein the side plate may include an exhaust port communicating with the internal hollow, a venting gas discharge path may be formed inside the side plate, and the venting gas may be discharged through the exhaust port.

The side plate may further include an awning to prevent the venting gas discharged through the exhaust port from coming into contact with other components.

Each of the plurality of disks may include at least one opening penetrating through the plurality of disks in the thickness direction of the plurality of disks.

The venting gas may flow in the internal hollow through the opening.

A thickness of each of the plurality of disks may be 0.5 mm to 2 mm.

The battery pack may further include an upper plate, wherein the upper plate includes a vent opening corresponding to the vent, and the venting gas and the exhaust particles flow through the vent opening.

The upper plate may include a hollow, and the venting gas and the exhaust particles flowing through the vent opening may be discharged through the hollow to the end plate.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating an example of a battery module according to an embodiment of the invention;
FIG. 2 is a perspective view schematically illustrating an example of a battery cell of the battery module of FIG. 1;
FIG. 3 is a perspective view schematically illustrating an example of a battery pack according to an embodiment of the invention;
FIGS. 4 and 5 are schematic diagrams schematically illustrating an example of the battery pack of FIG. 3;
FIGS. 6 and 7 are diagrams schematically illustrating an example of an end plate of FIG. 3;
FIGS. 8 to 10 are diagrams schematically illustrating an example of a turbine of FIG. 6;
FIGS. 11 and 12 are diagrams illustrating an example of operation of the turbine of FIG. 8;
FIG. 13 is a perspective view illustrating a joint relationship between an end plate and a side plate;
FIG. 14 is a perspective view illustrating an example of a side plate taken along line I-I' of FIG. 13; and
FIGS. 15 and 16 are perspective views illustrating an example of venting gas discharged through the side plate of FIG. 14.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It will be understood that, although the terms first, second, etc. may be used herein to describe various components, these components should not be limited by these terms. The terms are used only for the purpose of distinguishing one component from other components.

The terminology used herein is for the purpose of describing particular embodiments only and is not intended to be limiting of the invention. As used herein, the singular forms "a," "an", and "the" are intended to include the plural forms as well, unless the context clearly indicates otherwise.

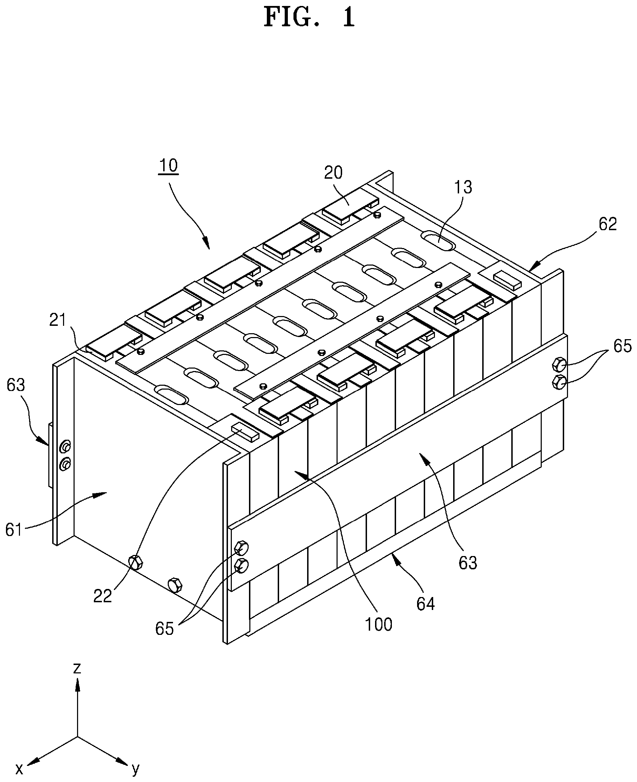

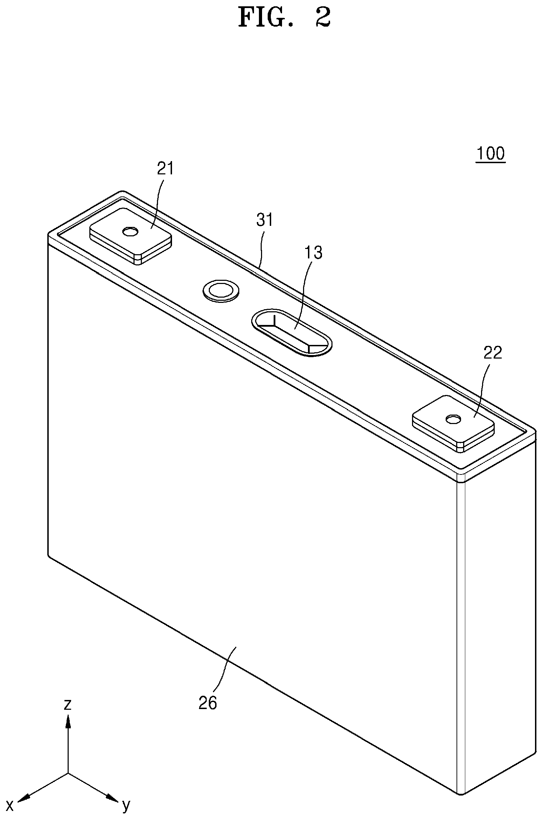

FIG. 1 is a perspective view schematically illustrating an example of a battery module 10 according to an embodiment of the invention, and FIG. 2 is a perspective view schematically illustrating an example of a battery cell 100 of the battery module 10.

Referring to FIGS. 1 and 2, the battery module 10 may have a plurality of battery cells 100 arranged in one direction in a module housing. The battery cells 100 may be accommodated inside the module housing in a stacked form. The battery cell 100 may be provided with a positive lead and a negative lead. The battery cell 100 may be, e.g., a circular type, a prismatic type, or a pouch type battery cell depending on the battery shape.

The battery module 10 may include the plurality of battery cells 100 connected in series or parallel with each other. A plurality of battery modules 10 may be connected to each other in series or parallel.

Each of the battery cells 100 may include electrode terminals 21 and 22, and the battery module 10 may include busbars 20, each connecting one of the electrode terminals 21 and 22 of one of the plurality of battery cells 100 to one of the electrode terminals 21 and 22 of another battery cell 100 adjacent to the one battery cell 100. The battery cell 100 may include a battery case and an electrode assembly and electrolyte housed in the battery case. The electrode assembly and electrolyte react electrochemically to generate energy. One side of the battery cell 100 may be provided with the electrode terminals 21 and 22 electrically connected to the busbars 20.

The plurality of battery cells 100 may be arranged (e.g., adjacent to each other) in one direction so that wide surfaces of the battery cells 100 face each other, and the plurality of arranged battery cells 100 may be fixed by the housing. The housing may include a pair of end plates 61 and 62 facing the wide surfaces of the battery cells 100 at opposite sides of the housing, side plates 63 opposite each other and connecting the pair of end plates 61 and 62 to each other, and a bottom plate 64 connecting the pair of end plates 61 and 62. The side plates 63 may support a side surface of the battery cell 100, and the bottom plate 64 may support a bottom surface of the battery cell 100. For example, the pair of end plates 61 and 62, the side plates 63, and the bottom plate 64 may be connected by members, such as bolts 65. In another example, the connection may be made by any one of soldering, resistance welding, laser welding or projection welding methods.

A can 26 may form the overall exterior of the battery cell 100 and may include a conductive metal, such as aluminum, an aluminum alloy, or nickel-plated steel. In some embodiments, the can 26 may provide a space in which the electrode assembly is accommodated.

The battery cell 100 may include a cap plate 31 covering one surface of the can 26, and the can 26 and the cap plate 31 may include a conductive material. Here, the positive and negative terminals 21 and 22 electrically connected to a positive electrode and a negative electrode of the electrode assembly, respectively, may be installed to protrude outwardly by penetrating through the cap plate 31.

For example, outer surfaces of upper pillars of the positive and negative terminals 21 and 22 protruding outwardly from the cap plate 31 may be threaded and fixed to the cap plate 31 with a nut. In another example, the positive and negative terminals 21 and 22 may be formed in a rivet structure and may be riveted or may be welded to the cap plate 31.

In some embodiments, the cap plate 31 may include a thin plate and may be coupled to one surface of the can 26. The battery cell 100 according to the present embodiment may include the can 26, in which the electrode assembly is built (e.g., accommodated), and the cap plate 31 may be coupled to an opening of the can 26.

The battery cell 100 according to the present embodiment is described as a prismatic secondary battery as an example only. The invention may be applied to various types of batteries, e.g., pouch-type batteries or cylindrical batteries.

Meanwhile, a serial connection has been described, but various connection structures may be adopted as needed. In some embodiments, the number and arrangement of the battery cells 100 may be changed as needed.

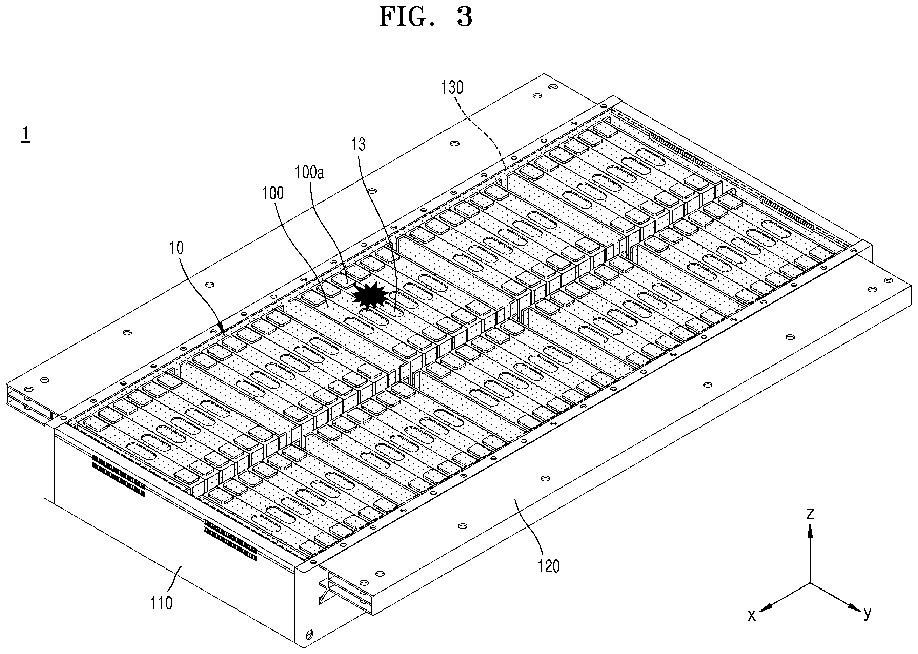

FIG. 3 is a perspective view schematically illustrating an example of a battery pack 1 according to an embodiment of the invention. Some elements are eliminated from FIG. 3 (relative to FIGS. 1 and 2), for convenience of illustration.

Referring to FIG. 3, the battery pack 1 according to an aspect of the invention may include battery cells 100, each having a vent 13, arranged (e.g., adjacent to each other) in a first direction (e.g., in an X-axis direction). The battery cells 100 may be stacked, and a pair of end plates may be arranged at opposite ends of the stacked battery cells 100.

For example, the battery pack 1 may include at least one battery module 10 and a pack housing with an accommodation space accommodating the at least one battery module 10. In another example, the battery pack 1 may accommodate directly a plurality of stacked battery cells 100 (i.e., without the battery module 10), so the stacked battery cells 100 may be accommodated in the accommodation space of the pack housing or may be accommodated in the accommodation space partitioned by a frame, partition, etc.

In some embodiments, the battery pack 1 may include a battery and a battery management system (BMS) for managing the battery. The BMS may include a detection device, a balancing device, and a control device.

The detection device may detect a status of the battery (e.g., voltage, current, temperature, etc.) and detect status information indicating the status of the battery. The detection device may detect the voltage of each battery cell 100 or each battery module 10 constituting the battery pack 1. The detection device may also detect the current flowing through the battery module 10 or each battery module 10 constituting the battery pack 1. The detection device may also detect battery cell 100 and/or battery module 10 and/or ambient temperature at least one point in the battery pack 1.

Meanwhile, the battery cell 100 generates a large amount of heat during charging/discharging. The generated heat accumulates in the battery cell 100 and accelerates deterioration of the battery cell 100. Therefore, the battery pack 1 may further include a cooling member to suppress deterioration of the battery cell 100. For example, the cooling member may be provided at the bottom of the accommodation space of the battery pack 1 in which the battery cell 100 is provided. In another example, the cooling member may be provided additionally or alternatively at the top or side of the accommodation space of the battery pack 1, e.g., depending on the battery pack 1.

Exhaust gas inside the battery cell 100, occurring in an abnormal operating condition, which is also known as thermal runaway or thermal event, may be discharged to the outside of the battery cell 100. The battery pack 1 or the battery module 10 may include an exhaust port or the like for discharging venting gas to prevent damage to the battery pack 1 or battery module 10.

The battery cells 100 may each be equipped with the vent 13, which is an exhaust passage for venting gas and exhaust particles occurring internally, so that the venting gas and exhaust particles occurring when an event occurs in the battery cell 100 may be discharged to the outside of the battery cell 100 through the vent 13. The discharged venting gas and exhaust particles may be discharged through an exhaust port or the like provided to prevent damage to the battery pack 1 or battery module 10.

For example, referring to FIG. 2, the vent 13 may be installed between the electrode terminals 21 and 22 on the cap plate 31 of the battery cell 100. For example, the vent 13 may be formed thinner than other portions of the cap plate 31 or may be provided with a notch, so as to be first affected by the pressure of the venting gas coming from inside the battery cell 100 and to allow the venting gas and exhaust particles to be discharged through the vent 13.

The pack housing may include pack end plates 110 and pack side plates 120 that accommodate the at least one battery module 10, and the pack end plates 110 may be arranged on opposite sides of the at least one battery module 10 in the first direction (e.g., in the X-axis direction). A plurality of battery modules 10 may be stacked in a row (e.g., in the first direction).

Referring to FIG. 3, each of the pack end plates 110 may be perpendicular to or may intersect a longitudinal direction of the pack side plate 120, i.e., each of the pack end plates 110 may extend (e.g., lengthwise) in a second direction (e.g., in the Y-axis direction) to intersect the X-axis direction. Each of the pack end plates 110 may include an internal hollow extending (e.g., lengthwise) in the second direction (e.g., in the Y-axis direction) connecting opposite sides of the pack end plate 110 that are in contact with different pack side plates 120.

For example, the pack end plate 110 may include a metal, e.g., stainless steel and/or aluminum. For example, the pack end plate 110 may have a plate shape.

In an optional embodiment, the pack end plate 110 may accommodate cell stacks in which the plurality of battery cells 100 are stacked together with the pack side plates 120 and may be arranged on opposite surfaces of the cell stack in the first direction (the X-axis direction) in which the plurality of battery cells 100 are stacked in a row. For example, an insulating material may be located between the pack end plate 110 and the cell stack in which the plurality of battery cells 100 are stacked, so that the pack end plate 110 may be insulated from the plurality of battery cells 100.

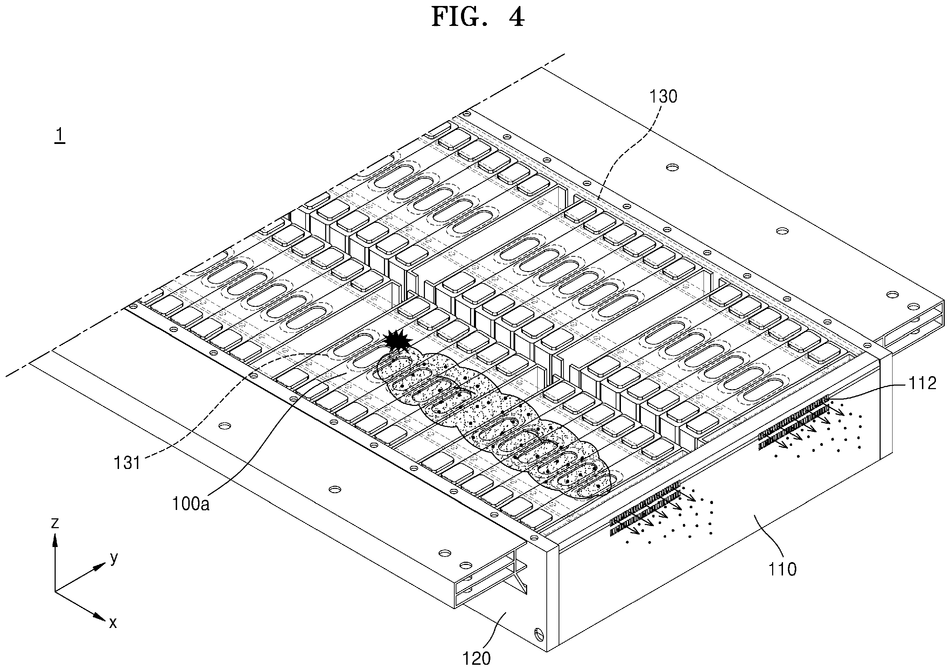

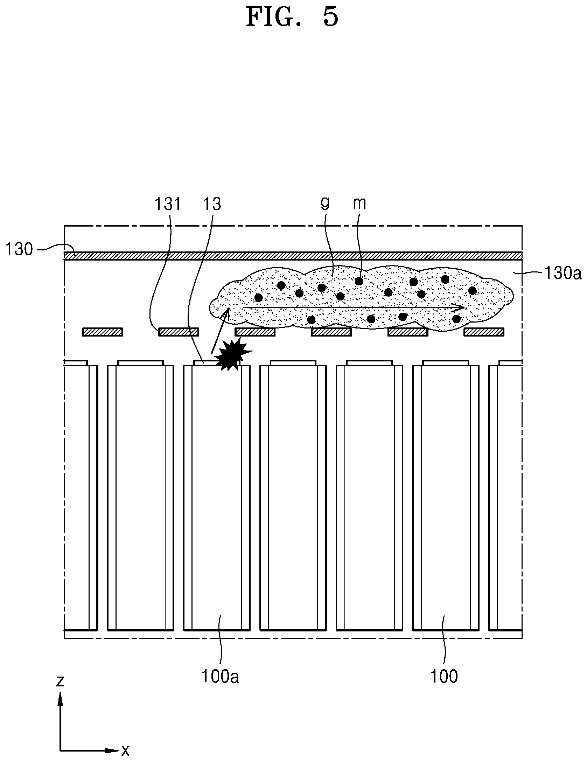

FIGS. 4 and 5 are schematic diagrams illustrating an example of the battery pack 1 of FIG. 3. FIG. 4 is a perspective view schematically illustrating the battery pack 1 of FIG. 3 from a different angle and with discharged gas, and FIG. 5 illustrated a partial, detailed schematic cross-section of FIG. 5..

Referring to FIGS. 4 and 5, the battery pack 1 may further include an upper plate 130 with a hollow 130a located inside (e.g., the hollow 130a may extend through the entirety of the upper plate 130). For example, referring to FIGS. 4-5, the upper plate 130 may be positioned above the battery cells 100 (e.g., the battery cells 100 may be between the bottom of the pack hosing and the upper plate 130), and may continuously overlap all the battery cells 100 in the battery pack 1.

As further illustrated in FIGS. 4-5, the upper plate 130 may include a vent opening 131 corresponding to the vent 13 on an inner surface facing the battery cell 100 (e.g., the vent opening 131 may face the interior of the pack housing and may overlap the vent 13 of the battery cell 100). The hollow 130a located inside the upper plate 130 may be connected to (e.g., in fluid communication with) the vent opening 131 to form a flow path, so that venting gas g and exhaust particles m described below may be discharged through the vent opening 131 and flow through the hollow 130a of the upper plate 130 to the outside (e.g., along arrows in FIG. 5).

For example, the upper plate 130 may have a plate shape covering an upper surface of the battery pack 1 and may include the hollow 130a located inside and the vent opening 131 located on the inner side facing the battery cell 100a. For example, referring to FIG. 5, the upper plate 130 may include a continuous upper side facing the exterior of the battery pack 1, and may include a lower side having the vent opening 131 and facing the battery cells 100 (e.g., the hollow 130a may be between the upper side and the lower side of the upper plate 130). For example, the upper plate 130 may include a plurality of vent openings 131 spaced apart from each other, such that each of the vent openings 131 may overlap a corresponding one of the vents 13. For example, the upper plate 130 may include a metal, such as stainless steel or aluminum.

For example, referring to FIG. 5, the venting gas g and the exhaust particles m occurring in a battery cell 100a in which an event occurred are discharged through the vent opening 131 located to correspond to the vent 13 of the battery cell 100a on the inner side of the upper plate 130, thereby preventing the high-temperature venting gas g and the exhaust particles m discharged from the battery cell 100a in which the event occurred from coming into contact with other battery cells 100. As such, other battery cells 100 may be prevented from being overheated.

In detail, the vent 13 of the battery cell 100a in which the event occurred may discharge the venting gas g and exhaust particles m due to explosion or other reasons. The venting gas g and exhaust particles m are discharged together from the same vent 13, and in case where the high-temperature venting gas g and exhaust particles m meet and react with each other, flames may be created. In this manner, the high-temperature venting gas g and exhaust particles m discharged through the vent 13 may flow into the vent opening 131 of the upper plate 130 and flow along the hollow 130a of the upper plate 130 out of the battery pack 1. For example, referring to FIGS. 4-5, the venting gas g and the exhaust particles m discharged through the vent opening 131 may move through the hollow 130a (i.e., hollow space) to the pack end plate 110 to be discharged to the outside through an outlet 112 in the pack end plate 110.

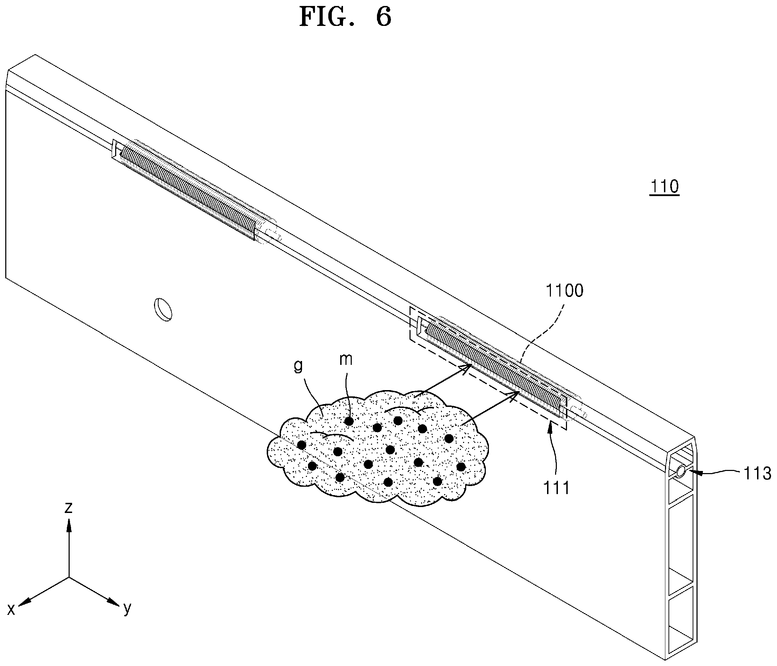

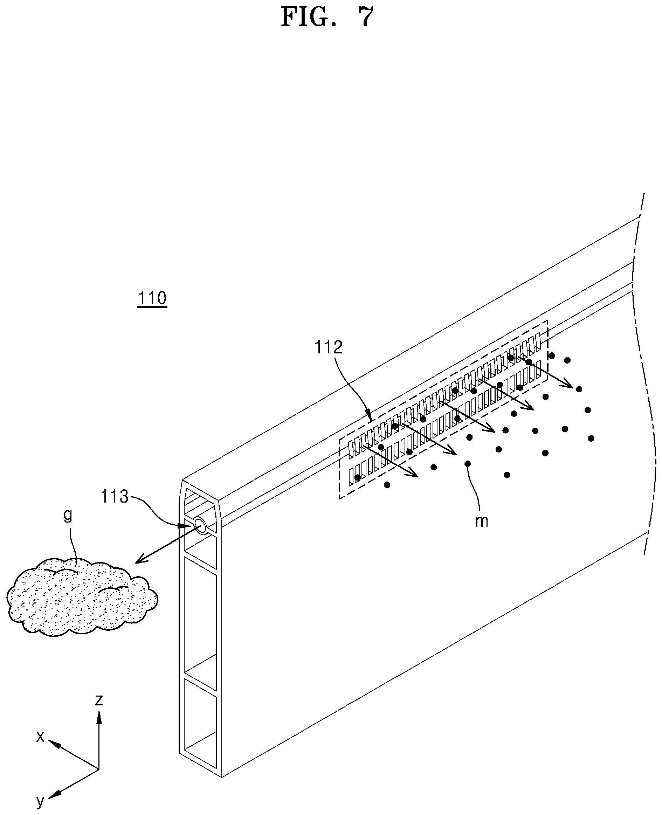

FIGS. 6 and 7 are diagrams schematically illustrating an example of the pack end plate 110 of FIG. 3. FIG. 6 illustrates a perspective view of the pack end plate 110, as viewed from an interior of the battery pack 1, and FIG. 7 illustrates a perspective view of the pack end plate 110, as viewed from an exterior of the battery pack 1.

Referring to FIG. 6, the pack end plate 110 may include at least one inlet 111 through which the venting gas g and exhaust particles m occurring inside the battery pack 1 are introduced, a turbine 1100 located inside the pack end plate 110 to correspond to (e.g., overlap or positioned to fit in) the inlet 111, and an internal hollow 113 located on opposite sides of the turbine 1100 to correspond to a rotating shaft of the turbine 1100. For example, as illustrated in FIG. 6, the pack end plate 110 may include a plurality of inlets 111 spaced apart from each other along a longitudinal direction of the pack end plate 110.

The pack end plates 110 may include the inlet 111, so that the venting gas g and exhaust particles m may flow from the hollow 130a in the upper plate 130 (FIG. 5) into the interior of the pack end plates 110. Through this, the path of the venting gas g and exhaust particles m emitted due to an explosion of the battery cell 100a may be induced.

The inlet 111 located in the pack end plate 110 may be located to correspond to (e.g., face and overlap) the hollow 130a of the upper plate 130 described above. Accordingly, the venting gas g and exhaust particles m introduced into the pack end plate 110 through the upper plate 130 may be introduced into the inlet 111 of the pack end plate 110 and pass through the internal hollow 113 inside the pack end plates 110.

The turbine 1100, which is rotatable, may be located in the internal hollow 113 of the pack end plates 110. For example, referring to FIG. 6, the turbine 1100 may extend (e.g., lengthwise) in parallel to the longitudinal direction of the internal hollow 113. The turbine 1100 may rotate due to blast pressure of the venting gas g and exhaust particles m emitted from the vent 13 when the event battery cell 100a explodes.

Referring to FIGS. 6 and 7, the pack end plate 110 may include the inlet 111 through which the venting gas g and the exhaust particles m are introduced in an inward direction and may further include the outlet 112 through which the exhaust particles m are discharged at a position corresponding to the inlet 111 on the outer surface of the pack end plate 110. For example, referring to FIGS. 4 and 7, the outlet 112 may face an exterior of the battery pack 1.

The inlet 111 may be connected to (e.g., in fluid communication with) the hollow of the upper plate 130 and may be an inlet through which the venting gas g and the exhaust particles m occurring in the vent 13 are simultaneously discharged. The venting gas g and exhaust particles m entering through the inlet 111 are separated from each other through the rotation of the turbine 1100, so that the exhaust particles m may be discharged through the outlet 112 and the venting gas g may move along the internal hollow 113.

Through this, the venting gas g and the exhaust particles m may be discharged separately, and the high-temperature venting gas g and the exhaust particles m may be prevented from reacting with each other, so that flames may not occur even in case of thermal runaway of the battery cell. That is, through the rotation of the turbine 1100, the venting gas g and the exhaust particles m emitted from the vent 13 of the battery cells may be separated by the turbine 1100, so that flames may not occur even when the vent 13 explodes.

The turbine 1100 may rotate at a maximum speed of 30,000 RPM. If the turbine 1100 rotates at a speed exceeding 30,000 RPM, the turbine 1100 may be damaged. The turbine 1100 may include heat-resistant and wear-resistant materials to withstand high temperature and high speed conditions.

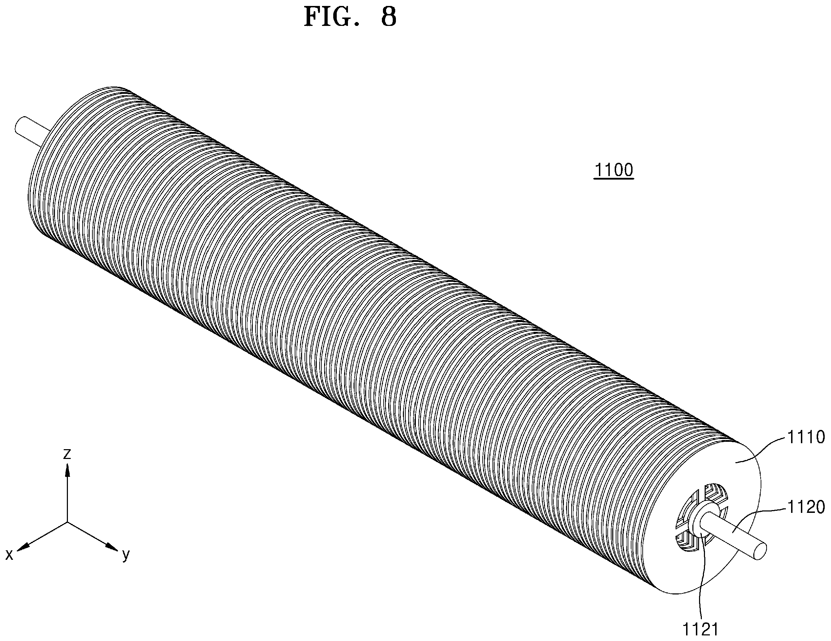

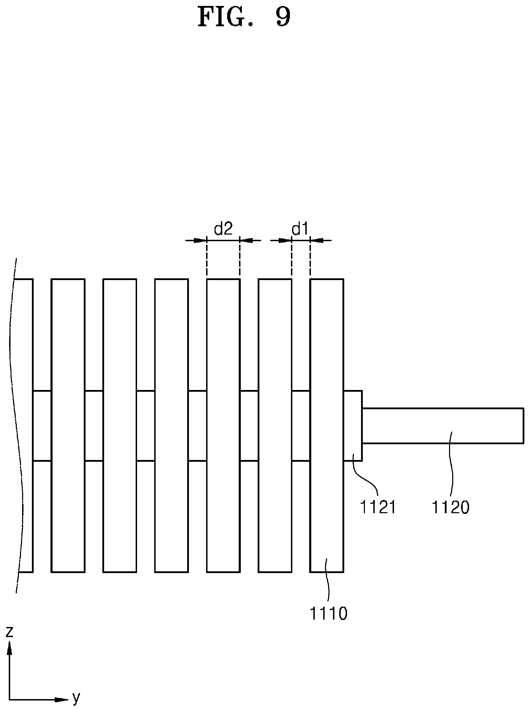

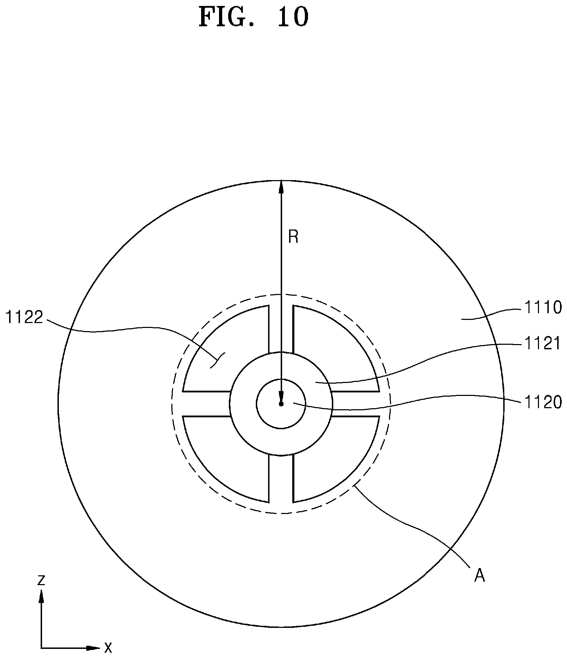

FIGS. 8 to 10 are diagrams schematically illustrating an example of the turbine 1100 of FIG. 6. FIG. 8 illustrates an enlarged perspective view of the turbine 1100, FIG. 9 illustrates a partial schematic side view of the turbine 1100, as viewed from the x-direction in FIG. 8, and FIG. 10 illustrates a cross-sectional side view of the turbine 1100, as viewed from the y-direction in FIG. 8.

Referring to FIGS. 8 to 10, the turbine 1100 may include a plurality of disks 1110 spaced apart from each other in the longitudinal direction of a rotating shaft 1120 (e.g., along the longitudinal direction of the turbine 1100 that may extend in the y-direction). The plurality of disks 1110 may be connected through the rotating shaft 1120, and a spacer 1121 may be placed therebetween to maintain a constant gap between the disks 1110. In some embodiments, each of the disks 1110 may include one or more openings 1122 penetrating through the disk 1110 in a thickness direction of the disk 1110 (e.g., in the y-direction), and a central region A including one or more openings 1122 may correspond to (e.g., may be aligned with) the internal hollow 113 of the pack end plate 110 described above.

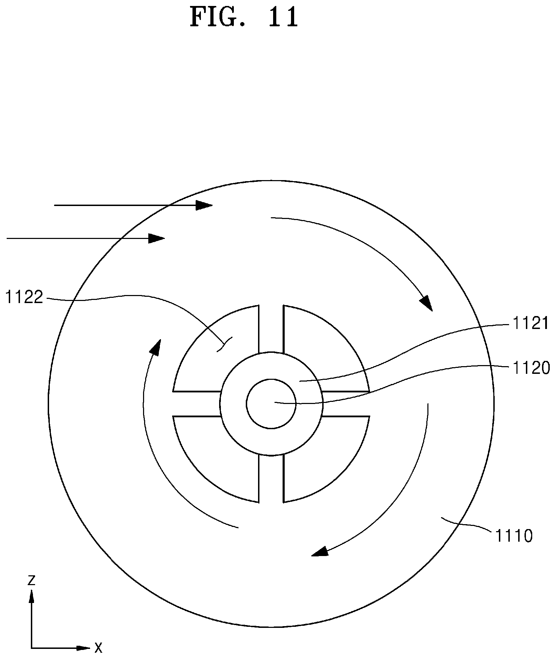

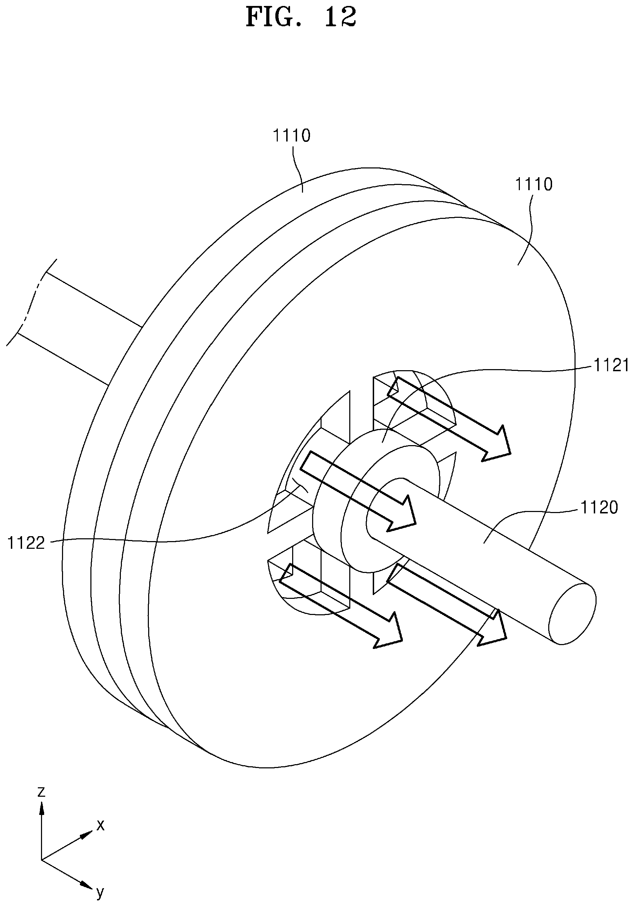

FIGS. 11 and 12 are diagrams illustrating an example of operation of the turbine 1100 of FIG. 8.

Referring to FIGS. 11 and 12, the disks 1110 may be operated by the discharge pressure of venting gas g and exhaust particles m occurring when an event of the battery cell occurs inside the battery pack. Here, the disks 1110 may be rotated at a high speed by the discharge pressure. In order for the disk 1110 to rotate by the discharge pressure of the venting gas and the exhaust particles, the principle of a boundary layer effect that occurs due to the interaction with the venting gas, which is a fluid, may be applied to the surface of each disk 1110. For example, the boundary layer effect may refer to a fluid layer that interacts with the surface of the disk 1110 when the venting gas flows and may be affected by the viscosity of the venting gas.

When the venting gas, which is a fluid, flows in a direction parallel to the disk 1110 (e.g., in the X-axis direction) between adjacent ones of the disks 1110 (that are spaced apart at a regular interval), a boundary layer may be formed on the surface of the disk 1110 due to the viscosity of the venting gas. Here, the spacing between the disks 1110 may be adjusted so that only a boundary layer exists between the disks 1110, and the disks 1110 may be rotated by this boundary layer.

In detail, a moving fluid may experience fluid friction, which impedes the motion of the fluid due to intermolecular force acting between fluids or between a fluid and a solid, and the fluid may have viscosity due to this fluid friction. In some embodiments, the venting gas having viscosity due to this friction may create a boundary layer on the surface of the disk 1110, and the disk 1110 may be rotated by the friction between the venting gas and the surface of the disk 1110 due to the boundary layer.

Meanwhile, in case where the gap between the disks 1110 becomes too large, a free-flow region of the venting gas that is not affected by the surface of the disk 1110 may be located on the boundary layer, and a portion of the venting gas flowing in the free-flow region may flow, while maintaining an existing flow velocity and may pass between the disks 1110 without transferring energy to the disks 1110. In case where sufficient interaction between the disks 1110 and the venting gas is not achieved due to the free flow of the venting gas, sufficient energy may not be transferred to the disks 1110, thereby reducing the force for rotating the disks 1110. Accordingly, by controlling the free flow of the venting gas by ensuring that each disk 1110 maintains a certain distance, only the boundary layer region may exist between the disks 1110, and the viscous venting gas may cause the plurality of disks 1110 to rotate by the interaction with the surface of the disk 1110 through the boundary layer, that is, the shear force due to friction.

Meanwhile, the venting gas flowing on the surface of the rotating disk 1110 due to the boundary layer effect may be affected by rotational force of the disk 1110, may flow in a spiral along the surface of the disk 1110 due to centripetal force and centrifugal force caused by the rotational force, and may flow to the center of the surface of the disk 1110 to flow into the opening 1122 of the disk 1110. Here, the opening 1122 of the disk 1110 may be connected to the internal hollow of the pack end plate.

Meanwhile, the exhaust particles ejected at the same speed as that of the venting gas may pass between the disks 1110, while maintaining the existing speed due to the momentum of the mass of the exhaust particles, and this momentum may be greater than the force generated by the interaction between the disks 1110 and the venting gas, so that the exhaust particles may move in the direction (X-axis direction) parallel to the surface of the disks 1110, which is the existing moving direction, and be discharged through the outlet of the end plate.

To sum up, the venting gas is rolled into the opening 1122 in the central region of the disks 1110, and the venting gas may pass through the opening 1122 and flow in a direction (the Y-axis direction) perpendicular to or intersecting the existing moving direction (the X-axis direction), and the exhaust particles may maintain the existing speed due to the momentum of the mass of the exhaust particles and continue to move in the existing moving direction (the X-axis direction) so as to be separated from the venting gas.

As a result, the venting gas may rotate the disks 1110 by the boundary layer effect generated on the surface of the disks 1110, flow along the surface of the disks 1110 into the openings 1122 of the disks 1110, change the course in the direction (the Y-axis direction) perpendicular or intersecting the existing moving direction (the X-axis direction), and flow into the internal hollow of the end plate, and the exhaust particles may be discharged through the outlet of the end plate in the existing moving direction (the X-axis direction), so that the exhaust particles and the venting gas may be separated from each other.

A gap between the disks 1110 may be 0.5 mm to 3 mm. In cases where a gap d1 between the disks 1110 is less than 0.5 mm, the gap between the disks 1110 may become too narrow and the venting gas and exhaust particles may not be able to flow between the disks 1110. In cases where the gap d1 between the disks 1110 exceeds 3 mm, the gap between the disks 1110 may become excessively wide, so that the free flow of the venting gas may increase so the boundary layer effect may not be sufficiently received and the disks 1110 may not rotate. Therefore, the venting gas g may flow along the internal hollow 113 of the pack end plate 110 through the opening 1122.

A thickness d2 of the disks 1110 may be 0.5 mm to 2 mm. In cases where the thickness d2 of the disks 1110 is less than 0.5 mm, the disks 1110 may not have sufficient rigidity, making it difficult to maintain the shape of the disks 1110 and to achieve sufficient speed. In cases where the thickness d2 of the disks 1110 exceeds 2 mm, the disks 1110 may become heavy and may not have sufficient speed and may become slow.

The disks 1110 may include a heat-resistant material. The disks 1110 may include high-strength, heat-resistant, and wear-resistant metals to continuously rotate under high-temperature conditions to separate the high-temperature venting gas g and exhaust particles m. For example, the disks 1110 may include carbon steel, stainless steel, or nickel alloy.

A radius R of the disks 1110 may be 10 mm to 15 mm. In cases where the radius R of the disks 1110 is less than 10 mm, the disk 1110 may not have a sufficient area of the disk 1110 in a rotation direction, so that the disk 1110 surface and the venting gas may not sufficiently interact, thereby reducing the boundary layer effect, so that the disks 1110 may not rotate sufficiently, and thus cannot effectively induce a change in direction of the venting gas and exhaust particles. In cases where the radius R of the disks 1110 exceeds 15 mm, the hollow area of the end plate 110 may become excessively wide, making it difficult to configure the compact battery pack 1.

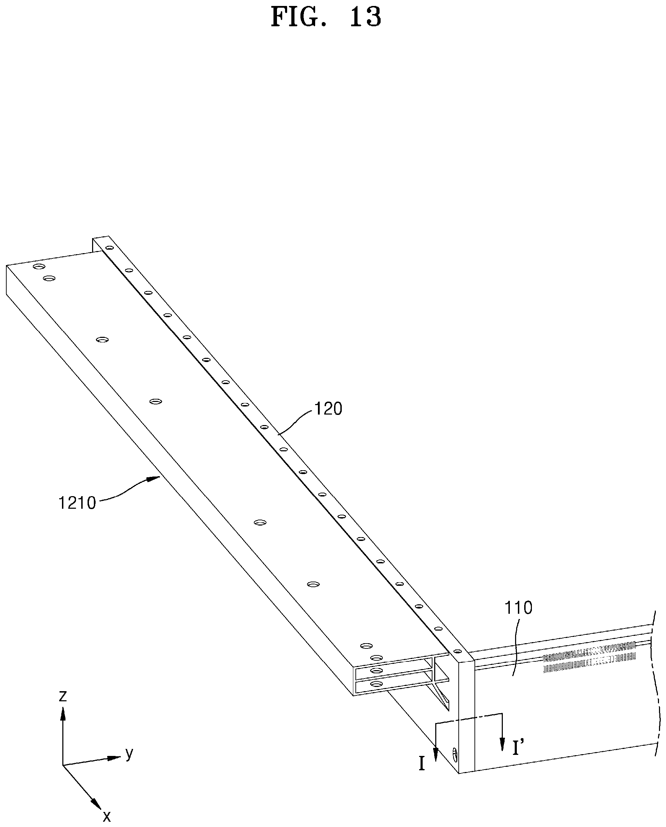

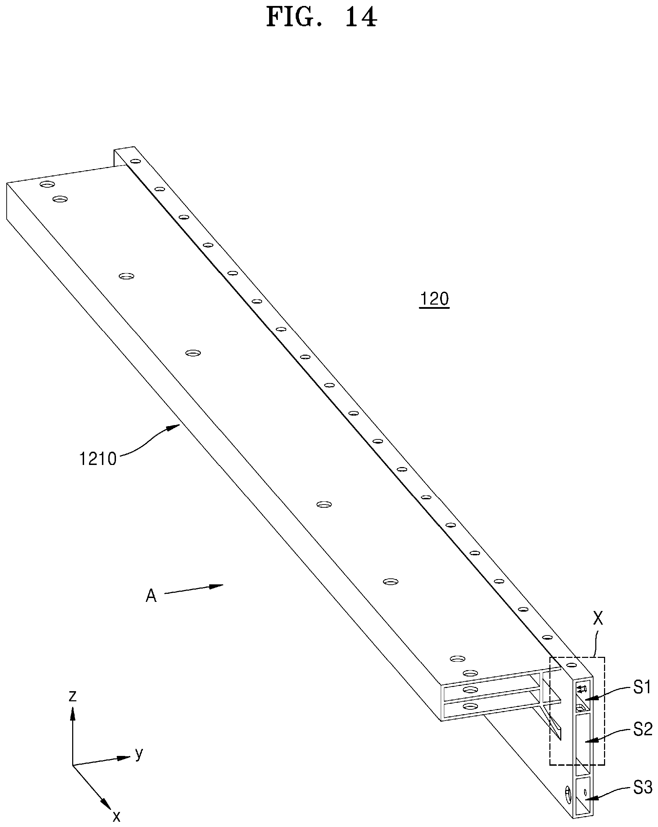

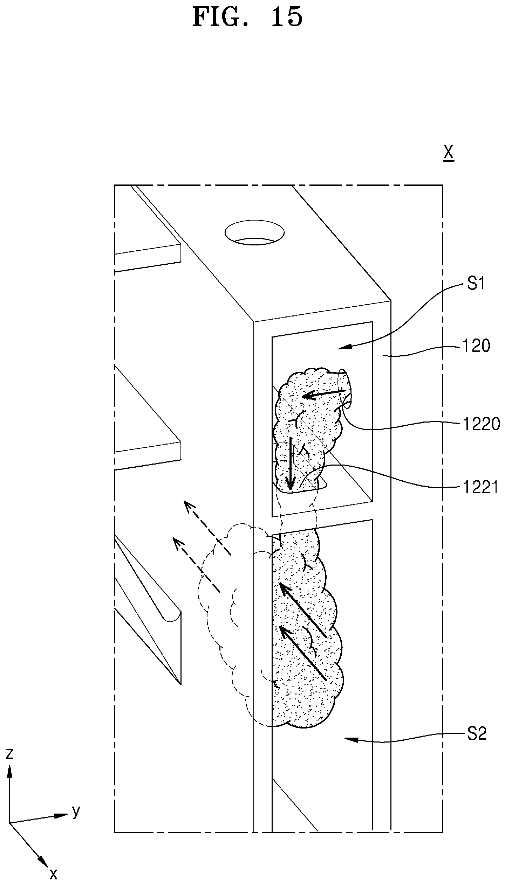

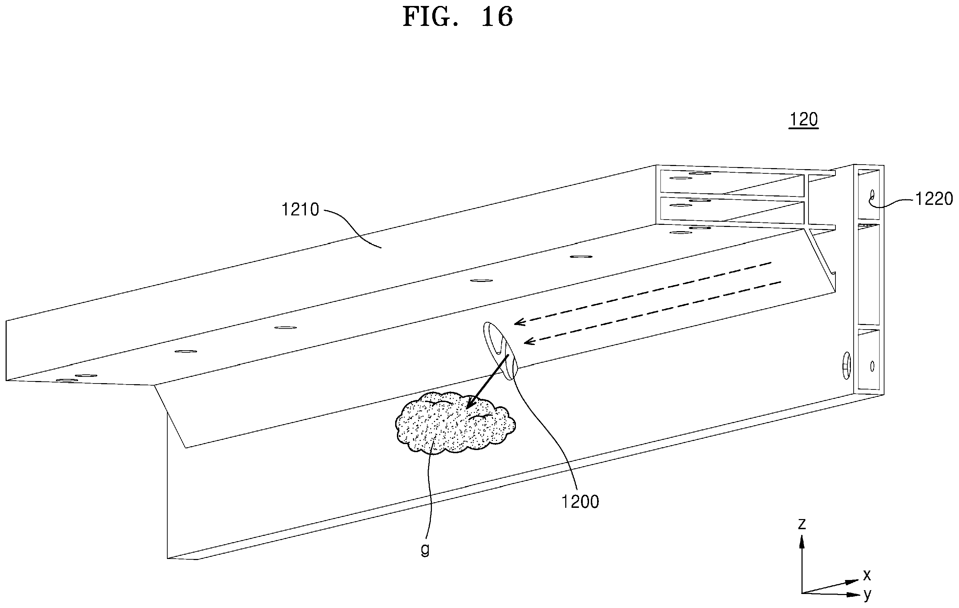

FIG. 13 is a perspective view illustrating a joint relationship between the pack end plate 110 and the pack side plate 120, FIG. 14 is a perspective view illustrating an example of the pack side plate 120 taken along line I-I' of FIG. 13, FIG. 15 is an enlarged portion X of FIG. 14, and FIG. 16 is a perspective view illustrating an example of venting gas discharged through the side plate of FIG. 14.

Referring to FIGS. 13 to 16, the battery pack 1 may further include the pack side plate 120 coupled with the pack end plates 110. The pack side plate 120 may have a first space S1, a second space S2, and a third space S3 defined therein, and the first space S1 may include an exhaust port 1220 connected to (e.g., in fluid communication with) the internal hollow 113 of the pack end plate 110.

The venting gas g separated from the exhaust particles m by the turbine 1100 and introduced into the internal hollow 113 of the pack end plate 110 may flow along the internal hollow 113 of the pack end plate 110 and may flow into the first space S1 of the pack side plate 120 through the exhaust port 1220 located in the first space S1 of the pack side plate 120. The venting gas g introduced into the first space S1 in this manner may fill the first space S1 or may be introduced into the second space S2 through an internal opening 1221 connecting the first space S1 to the second space S2. Here, the venting gas g introduced into the second space S2 may be discharged to the outside of the battery pack 1 through an external opening 1200 provided on one surface of the pack side plate 120 facing the outside opposite to the inside in which the battery cells 100 of the battery pack 1 are arranged in a region of the second space S2.

Referring to FIG. 13, an awning 1210 may extend in a direction perpendicular to the pack side plate 120 and have a region open to correspond to the external opening 1200 of the pack side plate 120 (FIG. 16). The external opening 1200 may discharge the venting gas g moving through the second space S2 of the pack side plate 120 to the outside. In some embodiments, the external opening 1200 may be located in the center of the awning 1210.

In some embodiments, the awning 1210 may have a width in a direction perpendicular to the pack side plate 120, so that the awning 1210 may prevent the venting gas g discharged through the external opening 1200 from coming into contact with other parts. Through this, even in the case where the high-temperature venting gas g is emitted from the battery pack 1, heat transfer to surrounding batteries may be prevented.

By way of summation and review, according to embodiments, in case of a fire occurring inside the battery pack, venting gas and exhaust particles are separated to prevent or substantially minimize flames from occurring between the venting gas and the exhaust particles, thereby improving the stability (e.g., structural stability) of the battery pack. That is, according to embodiments, an end plate of a battery pack may include a turbine therein to separate the venting gas and the exhaust particles discharged from the battery cells, thereby preventing contact between the venting gas and the exhaust particles.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A battery pack (1), comprising:
battery cells (100) adjacent to each other in a first direction and stacked into a stack, each of the battery cells (100) having a vent (13); and
a pair of end plates (110) at opposite ends of the stack, each of the pair of end plates (110) including:
an internal hollow (113) extending in a longitudinal direction thereof, the longitudinal direction extending in a second direction intersecting the first direction, and
a turbine (1100) in the internal hollow (113), the turbine (1100) being rotatable and including a plurality of disks (1110) spaced apart from each other in the longitudinal direction.

2. The battery pack (1) as claimed in claim 1, wherein the turbine (1100) is parallel to the internal hollow (113), the turbine (1100) being configured to separate a venting gas (g) and exhaust particles (m) emitted from the vent (13) of each of the battery cells (100).

3. The battery pack (1) as claimed in claim 2, wherein each of the pair of end plates (110) further includes:
an inlet (111) facing an interior of the battery pack (1), the venting gas (g) and the exhaust particles (m) flowing through the inlet (111) into the internal hollow (113); and
an outlet (112) facing an exterior of the battery pack (1), the exhaust particles (m) being discharged through the outlet (112) to the exterior of the battery pack (1).

4. The battery pack (1) as claimed in any of the preceding claims, further comprising a side plate (120) coupled to the pair of end plates (110), the side plate (120) including an exhaust port (1220) in fluid communication with the internal hollow (113).

5. The battery pack (1) as claimed in any of the preceding claims, wherein each of the plurality of disks (1110) includes at least one opening (1122), the at least one opening (1122) penetrating through a respective one of the plurality of disks (1110) in a thickness direction thereof.

6. The battery pack (1) as claimed in claim 5, wherein the internal hollow (113) is in fluid communication with the at least one opening (1122), the venting gas (g) flowing in the internal hollow (113) through the at least one opening (1122).

7. The battery pack (1) as claimed in any of the preceding claims, wherein the plurality of disks (1110) are spaced apart from each other by a gap of 0.5 mm to 3 mm.

8. A battery pack (1), comprising:
battery cells (100) adjacent to each other in a first direction and stacked into a stack, each of the battery cells (100) having a vent (13); and
a pair of end plates (110) at opposite ends of the stack, each of the pair of end plates (110) including:
an internal hollow (113) extending in a longitudinal direction thereof, the longitudinal direction extending in a second direction intersecting the first direction, and
a turbine (1100) in the internal hollow (113), the turbine (1100) being rotatable and including a plurality of disks (1110) including a heat-resistant material and spaced apart from each other in the longitudinal direction.

9. The battery pack (1) as claimed in claim 8, wherein the turbine (1100) is parallel to the internal hollow (113), the turbine (1100) being configured to separate a venting gas (g) and exhaust particles (m) emitted from the vent (13) of each of the battery cells (100).

10. The battery pack (1) as claimed in claim 9, wherein each of the pair of end plates (110) further includes:
an inlet (111) facing an interior of the battery pack (1), the venting gas (g) and the exhaust particles (m) flowing through the inlet (111) into the internal hollow (113); and
an outlet (112) facing an exterior of the battery pack (1), the exhaust particles (m) being discharged through the outlet (112) to the exterior of the battery pack (1).

11. The battery pack (1) as claimed in claim 9 or 10, further comprising a side plate (120) coupled to the pair of end plates (110), the side plate (120) including an exhaust port (1220) in fluid communication with the internal hollow (113) to define a venting gas (g) discharge path inside the side plate (120), and the venting gas (g) being discharged through the exhaust port (1220).

12. The battery pack (1) as claimed in any of the claims 8 to 11, wherein each of the plurality of disks (1110) includes at least one opening (1122), the at least one opening (1122) penetrating through a respective one of the plurality of disks (1110) in a thickness direction thereof.

13. The battery pack (1) as claimed in claim 12, wherein the internal hollow (113) is in fluid communication with the at least one opening (1122), the venting gas (g) flowing in the internal hollow (113) through the at least one opening (1122).

14. The battery pack (1) as claimed in any of the claims 8 to 13, wherein a thickness of each of the plurality of disks (1110) is in a range of 0.5 mm to 2 mm.

15. The battery pack (1) as claimed in any of the claims 8 to 14, further comprising an upper plate (130) including a vent opening (131) corresponding to the vent (13), a venting gas (g) and exhaust particles (m) flowing through the vent opening (131).
